# EUROPÄISCHE PATENTSCHRIFT

(11) **EP 3 460 301 B1**
(45) Veröffentlichungstag und Bekanntmachung des Hinweises auf die Patenterteilung: **16.06.2021**
(21) Anmeldenummer: 18202815.9
(22) Anmeldetag: 13.02.2014
(51) Int. Cl.: F16K 35/02, F16K 31/60

(54) **ENTRIEGELBARER THERMOSTATGRIFF FÜR LEGIONELLENSPÜLUNG**
RELEASABLE THERMOSTAT HANDLE FOR LEGIONELLA RINSING
POIGNÉE DE THERMOSTAT VERROUILLABLE POUR LE RINÇAGE DES LÉGIONELLES

(30) Priorität: 11.03.2013 DE 102013004078
(43) Veröffentlichungstag der Anmeldung: 27.03.2019
(62) Teilanmeldung aus: 14000525.7
(73) Patentinhaber: Hansa Armaturen GmbH, 70567 Stuttgart (DE)
(72) Erfinder: Assenmacher, Bernd, 70567 Stuttgart (DE)
(74) Vertreter: Ostertag & Partner Patentanwälte mbB

(56) Entgegenhaltungen:
- EP-A2- 0 855 545
- DE-A1- 19 519 816
- DE-A1-102005 038 312
- DE-A1-102009 012 839
- DE-A1-102010 039 678
- DE-U1- 7 734 717
- DE-U1- 20 109 774
- US-A1- 2009 108 223

## Beschreibung

Die Erfindung betrifft eine sanitäre Thermostatarmatur mit
a) einem Armaturenhauptteil mit einem Hauptteilgehäuse, in dem wasserführende Kanäle und Ventilsitze ausgebildet sind;
b) einem im Hauptteilgehäuse angebrachten, auf die Temperatur des ausfließenden Mischwassers ansprechenden thermostatischen Regelelement, das einen axial beweglichen Regelschieber, der mit den Ventilsitzen des Hauptteilgehäuses zusammenwirkt, sowie eine Drehspindel aufweist, mit der eine Solltemperatur des ausfließenden Mischwassers eingestellt werden kann;
c) einem an dem Hauptteilgehäuse befestigbaren Anschlagring, an dem mindestens eine radial verlaufende Anschlagfläche vorgesehen ist;
d) einem Handgriff, der eine Aufnahme zur drehschlüssigen Verbindung mit der Drehspindel und einen Anschlagkörper aufweist;
   wobei
e) der Handgriff in eine erste axiale Relativposition zum Anschlagring gebracht werden kann, in welcher sein Anschlagkörper beim Verdrehen der Drehspindel mit der Anschlagfläche des Anschlagringes wechselwirkt, sowie in eine zweite axiale Relativposition, in welcher sein Anschlagkörper an der Anschlagfläche vorbei bewegt werden kann, und
f) eine lösbare Verriegelungseinrichtung vorgesehen ist, welche eine unautorisierte Bewegung des Handgriffes aus der ersten in die zweite axiale Relativposition verhindert.

Sanitäre Thermostatventile besitzen im Allgemeinen einen an dem Hauptteilgehäuse in verschiedenen Winkelstellungen aufsteckbaren Anschlagring, der mit einem Anschlag an dem Handgriff so zusammenwirkt, dass eine bestimmte vorgegebene Maximaltemperatur des aus der Thermostatarmatur ausfließenden Mischwassers im Normalbetrieb nicht überschritten werden kann. Dies dient im Wesentlichen dem Verbrühschutz des Benutzers der Thermostatarmatur. In manchen Fällen ist es aber erwünscht, dass dieser Drehanschlag überwunden werden kann, um eine noch höhere Temperatur des ausfließenden Mischwassers zu erreichen. Ein Grund für eine derartige Erhöhung der Mischwassertemperatur kann beispielsweise darin liegen, dass eine zu Desinfektionszwecken gegen eine bakterielle Verseuchung der Thermostatarmatur wirksame Spülung mit heißem Wasser vorgenommen werden soll.

Eine Möglichkeit, den im Normalbetrieb der Thermostatarmatur wirksamen Drehanschlag zu überwinden, ist in der DE 77 34 717 U beschrieben. Hier wird, wenn der Drehanschlag unwirksam gemacht werden soll, der Handgriff axial nach außen gezogen, bis sein Anschlagkörper nicht mehr in Eingriff mit der Anschlagfläche des Anschlagringes gelangt. Dann kann der Handgriff unabhängig vom Anschlagring so weit verdreht werden, wie dies erforderlich und sinnvoll ist. Beim Gegenstand der DE 77 34 717 U genügt es, den Handgriff gegen die Kraft einer Feder aus der "Normalposition", die er in der üblichen Benutzung der Thermostatarmatur einnimmt, in die "Entriegelungsposition" zu ziehen, in welcher der Anschlag des Anschlagringes nicht mehr wirksam ist. Eine derartige Anordnung ist jedoch in vielen Fällen nicht praktikabel, insbesondere in öffentlichen Einrichtungen, wo eine unbefugte oder unbeabsichtigte Außerkraftsetzung des durch den Anschlagring vorgesehenen Drehanschlages nicht stattfinden darf.

Eine sanitäre Thermostatarmatur ähnlich der eingangs genannten Art ist aus der DE 10 2005 038 312 A1 bekannt geworden. Dort wird vorgeschlagen, eine vorhandene Verriegelungseinrichtung dadurch außer Kraft zu setzen, dass von außen ein Magnet herangebracht wird. Alternativ dazu kann auch durch Drehen an einem versenkt angeordneten Gewindestift die Verriegelungseinrichtung außer Eingriff gebracht werden.

Weitere sanitäre Thermostatarmaturen ähnlich denen der eingangs genannten Art sind der DE 195 19 816 A1 und der DE 10 2009 012 839 A1 zu entnehmen. Während bei der DE 195 19 816 A1 ein äußerer Teil des Griffstücks abmontierbar ist, um eine Verriegelungseinrichtung außer Eingriff bringen zu können, genügt bei der Armatur der DE 10 2009 012 839 A1 ein axialer Druck am Drehgriff gegen eine Federkraft, um einen den Drehwinkel begrenzenden Anschlag zu überwinden.

Aufgabe der vorliegenden Erfindung ist es, eine sanitäre Thermostatarmatur der eingangs genannten Art so auszugestalten, dass eine missbräuchliche oder versehentliche Aufhebung des vom Anschlagring vorgegebenen Drehanschlages nicht möglich ist, und das hinsichtlich der verwendeten thermostatischen Regelelemente flexibler ist.

Diese Aufgabe wird erfindungsgemäß dadurch gelöst, dass der Anschlagring axial versetzt zu der Anschlagfläche einen Anschlagkörper aufweist, der in der zweiten axialen Relativposition zwischen Handgriff und Hauptteilgehäuse mit dem Anschlagkörper des Handgriffes zusammenwirkt.

Erfindungsgemäß kann also eine unbefugte Person die axiale Relativposition zwischen Handgriff und Armaturenhauptteil nicht verändern. Der die zum normalen Gebrauch der Thermostatarmatur vorgesehene Maximaltemperatur des ausfließenden Mischwassers kann also nicht außer Kraft gesetzt werden, was der Sicherheit der Benutzer dient. Erst dann, wenn eine autorisierte Person eingreift und die Verriegelungseinrichtung entsprechend betätigt, kann die zweite axiale Relativposition zwischen Handgriff und Armaturenhauptteil erreicht werden, in der auch höhere Temperaturen möglich sind.

Die Existenz einer derartigen Verriegelungseinrichtung ist dem normalen Benutzer und Laien nicht bekannt; er kommt daher auch gar nicht auf den Gedanken, den "inneren" Drehanschlag des Anschlagringes außer Funktion zu setzen. Darüber hinaus hätte eine solche unbefugte Person auch nicht das Wissen, wie die Verriegelungseinrichtung zu betätigen wäre.

Dass der Anschlagring einen Anschlagkörper aufweist, der in der zweiten axialen Relativposition mit dem Anschlagkörper des Handgriffs zusammenwirkt, bedeutet, erfindungsgemäß ein zweiter Drehanschlag in der zweiten axialen Relativposition wirksam wird, der zwar eine größere Winkelbewegung als der Anschlagring selbst, aber doch nur eine endliche Winkelbewegung zulässt. Dies ist beispielsweise dort sinnvoll, wo das verwendete thermostatische Regelelement selbst keinen eigenen Drehanschlag aufweist.

Bei einer bevorzugten Ausführungsform der Erfindung umfasst die Verriegelungseinrichtung einen radial verschiebbar geführten Riegel, der über eine im Handgriff oder im Hauptteilgehäuse vorgesehene Öffnung mittels eines Werkzeuges betätigbar ist. Die kleine Öffnung, die bei dieser Ausführungsform der Erfindung notwendig ist, um den Riegel zu verschieben, kann im Allgemeinen so versteckt werden, dass sie bei der normalen Benutzung der Thermostatarmatur kaum oder nicht sichtbar ist. Jedenfalls wird die Bedeutung dieser Öffnung dem Laien nicht klar; auch hätte er nicht die Möglichkeit, durch diese Öffnung hindurch den Riegel zu verschieben.

Bevorzugt ist der Riegel am Handgriff verschiebbar geführt und gemeinsam mit diesem axial bewegbar, wobei er mit einem axial gegenüber dem Hauptteilgehäuse nicht beweglichen Teil zusammenwirkt.

Dabei ist das axial nicht bewegliche Teil vorzugsweise ein Aufnahmeteil, welches den äußeren Endbereich der Drehspindel drehschlüssig aufnimmt und das selbst mit dem Handgriff drehschlüssig verbunden aber axial verschiebbar gegenüber diesem ist. Zweckmäßig besitzt der Riegel eine Innenausnehmung, die eine solche Form aufweist, dass sie in einer Radialstellung des Riegels das mit ihm zusammenwirkende, axial nicht bewegliche Teil passieren lässt, während in einer anderen Radialstellung das axial bewegliche Teil nicht passieren kann.

Selbstverständlich ist es auch möglich, dass der Riegel am Hauptteilgehäuse axial feststehend geführt ist und mit einem gemeinsam mit dem Handgriff axial beweglichen Teil zusammenwirkt.

Besonders günstig ist es, wenn eine Federeinrichtung vorgesehen ist, welche den Riegel in diejenige Radialstellung drückt, in welcher eine Axialbewegung des Handgriffes aus der ersten axialen Relativposition unterbunden ist. Aus Sicherheitsgründen wird also ohne Zutun einer Person die Verriegelungseinrichtung immer die Bewegung des Handgriffes aus der ersten in die zweite axiale Relativposition zum Hauptteilgehäuse unterbinden.

Ein Ausführungsbeispiel der Erfindung wird nachfolgend anhand der Zeichnung näher erläutert; es zeigen
- Figur 1:: einen Axialschnitt durch eine sanitäre Thermostatarmatur im normalen Betriebsmodus;
- Figur 2:: perspektivisch die Innenansicht des Handgriffes der Thermostatarmatur der Figur 1 ;
- Figur 3:: perspektivisch das Armaturenhauptteil der Thermostatarmatur der Figur 1 ;
- Figur 4:: einen Schnitt gemäß Linie A-A von Figur 1 ;
- Figur 5:: einen Schnitt gemäß Linie B-B von Figur 1 ;
- Figur 6:: einen Schnitt gemäß Linie C-C von Figur 1 ;
- Figur 7:: einen Schnitt gemäß Linie D-D von Figur 1 ;
- Figur 8:: einen Schnitt durch die sanitäre Thermostatarmatur der Figur 1 , jedoch in einem Spülmodus;
- Figur 9:: perspektivisch die Innenansicht des Handgriffes im Spülmodus;
- Figur 10:: einen Schnitt gemäß Linie A-A von Figur 8 ;
- Figur 11:: einen Schnitt gemäß Linie B-B von Figur 8 ;
- Figur 12:: einen Schnitt gemäß Linie C-C von Figur 8 ;
- Figur 13:: einen Schnitt gemäß Linie D-D von Figur 8 .

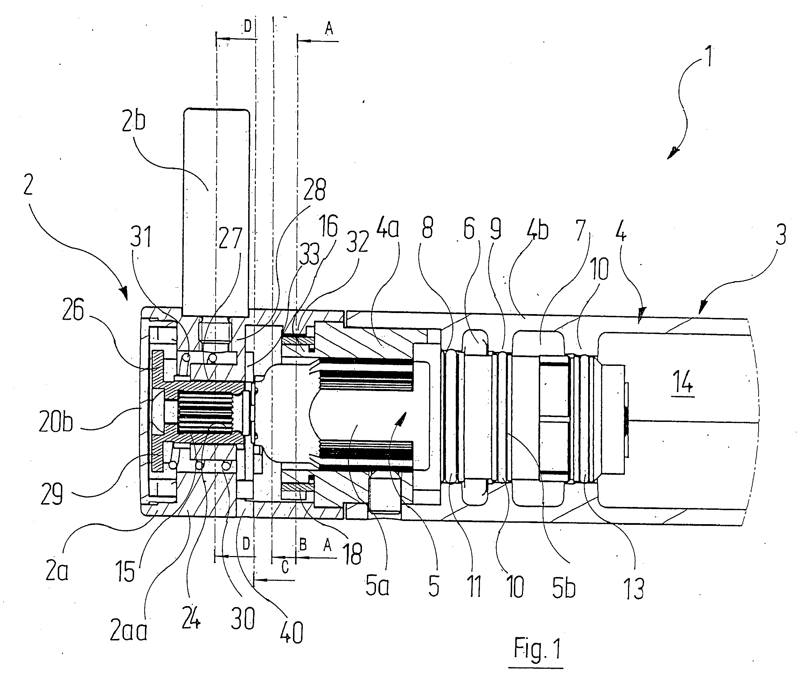

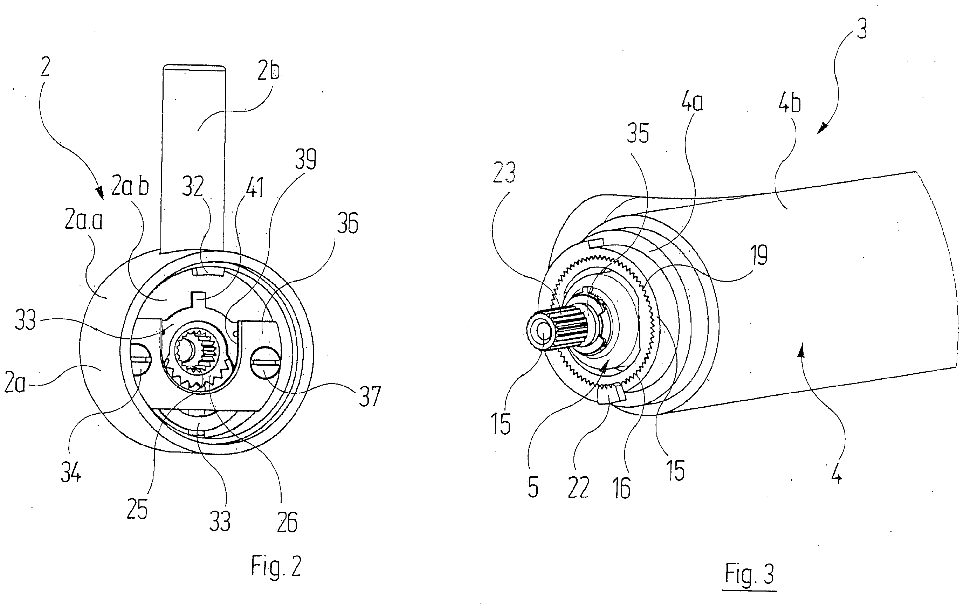

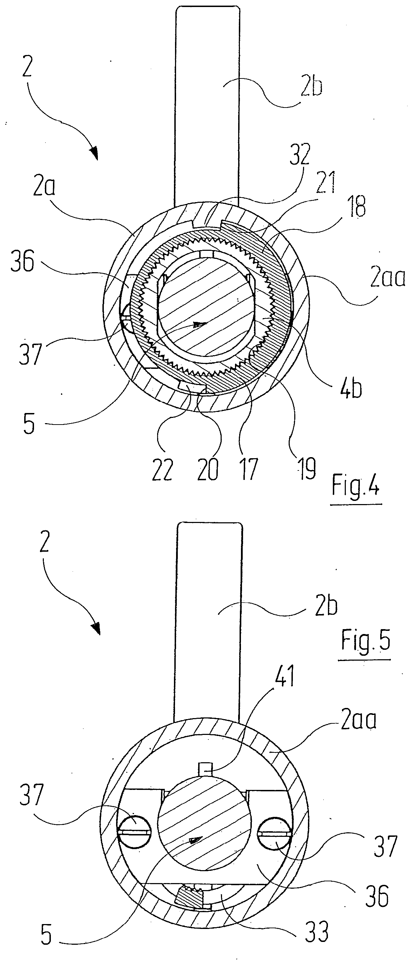

Die in der Zeichnung dargestellte und insgesamt mit dem Bezugszeichen 1 gekennzeichnete sanitäre Thermostatarmatur umfasst in bekannter Weise zwei für den Benutzer ohne weiteres erkennbare Hauptkomponenten, nämlich einen von Hand bedienbaren Handgriff 2, an dem der Benutzer durch Drehen um eine Achse die gewünschte Solltemperatur des aus der Thermostatarmatur 1 ausfließenden Mischwassers einstellen kann, sowie ein Armaturenhauptteil 3, welches die Wasserwege und die die Wasserströme steuerenden und regelnden Elemente enthält. Diese beiden Hauptkomponenten 2, 3 sind in den Figuren 3 und 4 noch einmal perspektivisch dargestellt, wobei der Blickjeweils auf diejenige Seite fällt, die im montierten Zustand der Figur 1 der jeweils anderen Hauptkomponente 2, 3 zugewandt ist.

Zunächst wird das Armaturenhauptteil 3 näher beschrieben, wobei insbesondere auf die Figur 1 Bezug genommen wird. Die Grundkonstruktion des Armaturenhauptteiles 3 darf als bekannt vorausgesetzt werden. Hier genügt es zu wissen, dass es ein Hauptteilgehäuse 4 aufweist, welches im dargestellten Ausführungsbeispiel aus Herstellungsgründen aus zwei miteinander verbundenen Gehäuseteilen 4a und 4b zusammengesetzt ist. In Figur 1 von links her erstreckt sich durch das Gehäuseteil 4a und in das Gehäuseteil 4b hinein das eigentliche Regelelement 5, das nur in der Außenansicht gezeigt ist und in bekannte Weise ein Thermostatventil und einen in das Gehäuseteil 4b hineinragenden Regelschieber 5b umfasst.

Zwischen dem Gehäuseteil 4b und dem Regelschieber 5b ist ein erster ringförmiger Wasserraum 6 ausgebildet, der mit dem nicht dargestellten Kaltwasseranschluss der Thermostatarmatur 1 in Verbindung steht. Ein zweiter Wasserringraum 7 zwischen Gehäuseteil 4b und Regelschieber 5b kommuniziert mit dem Warmwasseranschluss der Thermostatarmatur 1. Ringstege 8, 9, 10 am Gehäuseteil 4b wirken mit O-Ring-Dichtungen 11, 12, 13 am Regelschieber 5b zusammen und dichten so die Ringräume 6 und 7 in axialer Richtung ab.

Der Regelschieber 5b ist gegenüber dem hauptsächlich im Gehäuseteil 4a angeordneten Regelteilgehäuse 5a in bekannter Weise axial verschiebbar: Bei einer Temperaturerhöhung des Mischwassers, die von einem Teil des Regelelements 5 bildenden Dehnstoffelement erfasst wird, schiebt sich der Regelschieber 5b weiter aus dem Regelteilgehäuse 5a heraus und sorgt dafür, dass die Warmwasserströmung durch den Regelschieber 5b gedrosselt und stattdessen die Kaltwasserströmung durch den Regelschieber 5b erhöht wird, was zu einer konstanten Temperatur des zu einem Auslauf der Thermostatarmatur 1 führenden Mischwassers führt. Diese Regelverhältnisse sind dem Fachmanne bekannt und brauchen hier nicht näher erläutert zu werden.

Die Solltemperatur des ausfließenden Mischwassers lässt sich über eine Drehspindel 15 des Regelteils 5 einstellen. Die Drehspindel 15 ragt, wie insbesondere der Figur 3 zu entnehmen ist, aus dem Armaturenhauptteil 3 heraus; auf sie wird der Handgriff 2 in weiter unten noch beschriebener Weise aufgesetzt.

Um zu verhindern, dass sich der Benutzer der sanitären Thermostatarmatur 1 an zu heißem Wasser verbrühen kann, ist eine Drehanschlageinrichtung vorgesehen, die nunmehr näher erläutert wird.

Das Gehäuseteil 4a des Armaturenhauptteiles 3 besitzt einen in Figur 1 nach links weisenden, im Durchmesser etwas reduzierten Kragen 16, der eine achsparallele Außenverzahnung 17 besitzt. Der Kragen 16 mit seiner Außenverzahnung 17 ist besonders gut in Figur 4 zu erkennen.

Auf den Kragen 16 ist ein Anschlagring 18 aufgeschoben, der an seiner Innenmantelfläche eine zur Verzahnung 17 des Kragens 16 komplementäre Innenverzahnung 19 trägt. Auch dieser Anschlagring 18 mit seiner Innenverzahnung 19 ist besonders gut aus Figur 4 erkennbar. Über einen gewissen Winkelbereich ist der Außendurchmesser des Anschlagringes 18 größer als im verbleibenden Winkelbereich, so dass die Außenkontur des Anschlagringes 18 zwei etwa in radialer Richtung verlaufende Anschlagflächen 20, 21 besitzt. Außerdem ist an den Anschlagring 18, axial in Richtung nach außen, also auf den Handgriff 2 zu, versetzt, eine Anschlagnase 22 angeformt, auf deren Bedeutung weiter unten eingegangen wird.

Der nach außen ragende Bereich der Drehspindel 15 trägt eine achsparallele Außenverzahnung 23.

Damit ist die Beschreibung des Armaturenhauptteiles 3 zunächst abgeschlossen; es folgt die Erläuterung der zweiten Hauptkomponente der Thermostatarmatur 1, nämlich des Handgriffes 2.

Der Handgriff 2 weist äußerlich die bekannte Form auf, die durch ein becherförmiges Hauptteil 2a und einen radial von diesem abstehendes stangenähnliches Handhabungsteil 2b charakterisiert ist. Das Handhabungsteil 2b ist in der hohlzylinderförmigen Umfangswand 2aa verschraubt, die nachfolgend auch "Schürze" 2aa genannt wird. Der Boden oder Deckel 2ab des becherförmigen Hauptteiles 2a ist ein gesondertes Teil, das in bekannter Weise in den Innenraum der Schürze 2aa eingeschoben und dort in geeigneter Weise lösbar befestigt ist.

Wie insbesondere der Figur 1 zu entnehmen ist, ist der Außendurchmesser der Schürze 2aa mit dem Außendurchmesser des Gehäuseteiles 4b des Armaturenhauptgehäuses 3 identisch. Der Innendurchmesser der Schürze 2aa in dem Armaturengehäuse-Hauptteil 3 benachbarten Bereich entspricht dem Außendurchmesser des Gehäuseteiles 4a in demjenigen Bereich, in dem dieses axial über das Gehäuseteil 4b übersteht. Auf diese Weise kann der Handgriff 2 mit dem Endbereich seiner Schürze 2aa über den fraglichen Bereich des Gehäuseteiles 4a geschoben werden, bis seine ringförmige Stirnfläche sich in unmittelbarer Nähe der ringförmigen Stirnfläche des Gehäuseteiles 4b befindet. Dies ist in Figur 1 dargestellt.

Dem Handgriff 2 ist eine Aufnahme 24 für die Drehspindel 15 des Regelteiles 5 in Form einer zylindrischen Bohrung zugeordnet, die mit einer achsparallelen, zur Außenverzahnung 23 der Drehspindel 15 komplementären Innenverzahnung 25 versehen ist. Auf diese Weise kann die Aufnahme 24 drehschlüssig über die Drehspindel 15 geschoben und sodann mit einer axial verlaufenden, nicht dargestellten Schraube miteinander verbunden werden.

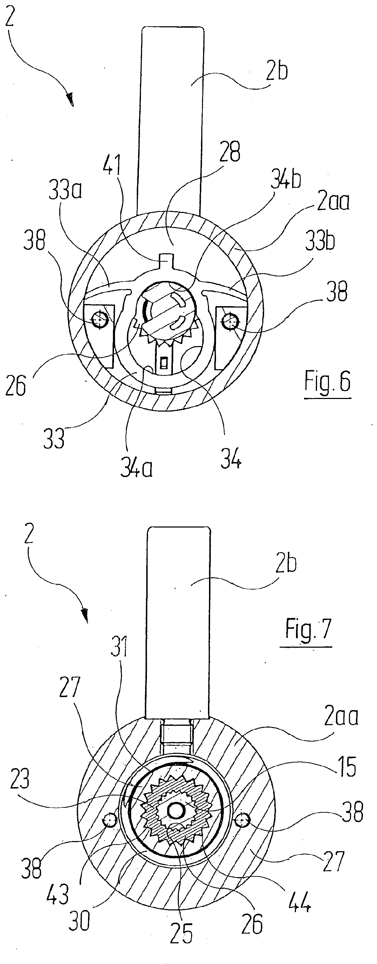

Bei herkömmlichen Handgriffen 2 ist die Aufnahme 24 starr, im Allgemeinen einstückig, mit einem Boden oder Deckel des Handgriffes 2 verbunden. Im vorliegenden Falle ist dies anders: Die Aufnahme 24 ist in einem gesonderten, vorzugsweise aus Kunststoff hergestellten Aufnahmeteil 26 ausgebildet, welches in einer Durchgangsbohrung einer radial, also etwa parallel zum Deckel 2ab verlaufenden Wand 28 der Schürze 2aa vorgesehen ist. Das Aufnahmeteil 26 und die Wand 28 sind über komplementäre achsparallele Verzahnungen 43, 44 (vgl. insbesondere Figur 7) drehschlüssig aber axial gegeneinander verschiebbar verbunden.

Das Aufnahmeteil 26 besitzt an seinem äußeren, dem Deckel 2ab benachbarten Ende einen radial überstehenden Flansch 29. Eine Ringnut 30 in der Wand 28 umgibt koaxial das Aufnahmeteil 26. Eine Druckfeder 31 ist zwischen dem Flansch 29 des Aufnahmeteiles 26 und dem Grund der Ringnut 30 in der Wand 28 der Schürze 2aa verspannt. Sie drückt also den Handgriff 2 in Figur 1 so weit wie möglich nach rechts. In der normalen Betriebsweise der sanitären Thermostatarmatur 1 bedeutet dies, dass entweder der Flansch 29 des Aufnahmeteiles 26 an der Innenseite des Deckels 2ab oder die ringförmige Stirnseite der Schürze 2aa an der ringförmigen Stirnseite des Gehäuseteiles 4b anstößt.

An die Innenmantelfläche der Schürze 2aa des Handgriffes 2b ist ein Anschlagkörper in Form einer radial nach innen stehende Anschlagnase 32 angeformt. Deren axiale Position und deren Abmessungen sind so gewählt, dass er in der in Figur 1 dargestellten Relativposition von Handgriff 2 und Armaturenhauptteil 3 in der axialen Höhe des Anschlagringes 18 liegt, wobei er in denjenigen Winkelbereich eingreift, in dem der Außenradius des Anschlagringes 18 verringert ist. Die Verhältnisse sind aus Figur 4 besonders gut zu erkennen. Dies bedeutet, dass der Handgriff 2 um die gemeinsame Achse von Handgriff 2 und Armaturenhauptteil 3 um den Winkel verdreht werden kann, der dem Winkelbereich verringerten Durchmessers des Anschlagringes 18 entspricht. In beiden Endpositionen der Drehbewegung stößt die Anschlagnase 32 des Handgriffes 2 an einer der beiden Anschlagflächen 20, 21 des Anschlagringes 18 an.

Grundsätzlich könnte, soweit bisher beschrieben, der Handgriff 2 in axialer Richtung von dem Armaturenhauptteil 3 weggezogen werden. Damit dies nicht unautorisiert geschieht, ist eine Verriegelungseinrichtung vorgesehen. Diese umfasst einen in radialer Richtung verschiebbaren Riegel 33, der besonders deutlich in den Figuren 3 und 6 dargestellt ist. Wie insbesondere der Figur 6 zu entnehmen ist, ist der Riegel 33 ein vorzugsweise aus Kunststoff hergestelltes Formteil mit einer Innenausnehmung 34, die entfernt an ein Schlüsselloch erinnert.

Das heißt, die Innenausnehmung 34 wird in einer Richtung von einem ersten Kreisbogen größeren Durchmessers 34a und, an diesen anschließend in entgegengesetzter Richtung, einem zweiten Kreisbogen kleineren Durchmessers 34b begrenzt. Der Radius im Kreisbogen 34a größeren Durchmessers ist größer als der Außenradius des Aufnahmeteils 26. Im Bogenbereich 34b kleineren Durchmessers ist der Radius kleiner als der Außendurchmesser des Aufnahmeteils 26.

Wie insbesondere der Figur 1 entnommen werden kann, liegt der Riegel 33 mit der in dieser Figur linken Seitenfläche an der benachbarten Aussenfläche der Wand 28 an. an der gegenüberliegenden Seitenfläche wird der Riegel 33 von einer Halteplatte 36 verschiebbar geführt. In der in Figur 1 dargestellten Relativposition von Riegel 33 und dem übrigen Handgriff 2 lässt sich also der Handgriff 2 nicht in axialer Richtung von dem Armaturenhauptteil 3 wegziehen, da der Bogenbereich 34b der Innenausnehmung 34 des Riegels 33 an der Seitenwand des axial Aufnahmeteils 26 anstößt.

Das Halteblech 36 ist mittels zweier Schrauben 37 an zwei in der Querwand 27 des Handgriffes 2 vorgesehenen Gewindebohrungen 39 befestigt. Es besitzt eine U-förmige Ausnehmung 39, die so bemessen ist, dass sie bei einer Axialverschiebung des Handgriffes 2 von dem Aufnahmeteil 26 passiert werden kann (vgl. Figur 2).

Wie Figur 6 zeigt, ist der Riegel 33 mit zwei gegenüberliegenden, leicht gekrümmten Federabschnitten 33a, 33b versehen, welche federnd an der Innenmantelfläche der Schürze 2aa anliegen. Sie sorgen dafür, dass normalerweise der Riegel 33 die in Figur 6 dargestellte Position einnimmt, in welcher er eine axiale Bewegung des Handgriffes 2 gegenüber dem Armaturenhauptteil 3 unterbindet.

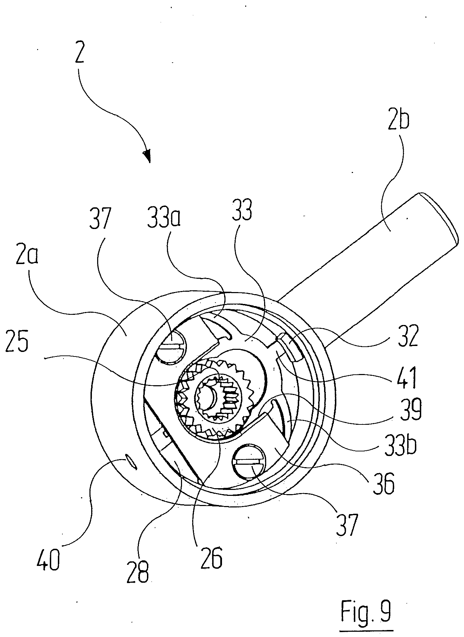

Der Riegel 33 kann jedoch aus der in Figur 6 dargestellten Position in eine Entriegelungsstellung linear verschoben werden. Hierzu ist in der Schürze 2aa des Handgriffes 2 eine kleine Durchgangsbohrung 40 vorgesehen, die in Figur 1 und in Figur 9 zu erkennen ist. Durch diese Durchgangsbohrung 40 kann ein stiftartiges Werkzeug, beispielsweise ein Imbusschlüssel geeigneten Durchmessers, eingeführt werden. Mit dessen Hilfe kann der Riegel 33 in radialer Richtung verschoben werden, bis eine Anschlagnase 41 an der Innenmantelfläche der Schürze 2aa anstößt. Dann ist der Bogenbereich 34a der Innenausnehmung 34 des Riegels 33 koaxial zur Drehspindel 15. Eine Axialbewegung des Handgriffes 2 gegenüber dem Armaturenhauptteil 3 ist nunmehr möglich.

Die oben beschriebene sanitäre Thermostatarmatur 1 lässt sich in zwei unterschiedlichen Betriebsmoden betreiben:
Der erste Betriebsmodus, der dem normalen Betrieb der Thermostatarmatur 1 bei der normalen Entnahme von Wasser entspricht, ist in den Figuren 1 bis 7 dargestellt. Er zeichnet sich dadurch aus, dass die Schürze 2aa des Handgriffes 2, wie aus Figur 1 ersichtlich, bis nahe an die ringförmige Stirnfläche des Gehäuseteiles 4b des Armaturenhauptteiles 3 herangeführt ist und der Riegel 33 die Axialbewegung des Handgriffs 2 blockiert. Der Handgriff 2 kann aufgrund dieser Verriegelungswirkung nicht in axialer Richtung von dem Armaturenhauptteil 3 weggezogen werden. Die Verdrehung des Handgriffes 2 unter Mitnahme der Ventilspindel 15 ist dadurch begrenzt, dass die Anschlagnase 32 der Schürze 2aa in den Winkelbereich verringerten Durchmessers des Anschlagringes 18 eingreift und über die Anschlagflächen 20, 21 hinaus nicht bewegt werden kann. Durch die Wahl des Winkels, unter dem der Anschlagring 18 auf das Gehäuseteil 2a aufgesteckt wird, lässt sich die maximale Temperatur festlegen, welche das aus dem Auslauf der Thermostatarmatur 1 fließende Mischwasser einnehmen kann. Hierdurch werden Verbrühungen des Benutzers vermieden.

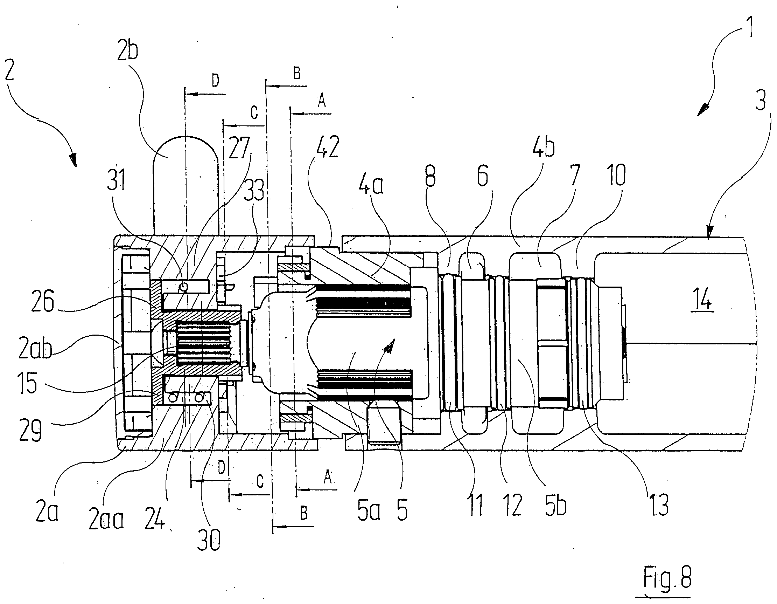

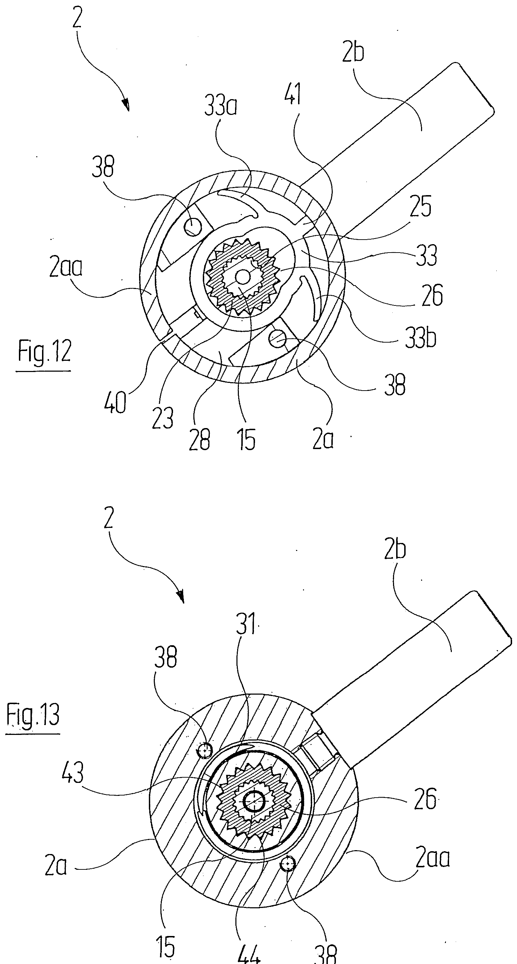

Soll die sanitäre Thermostatarmatur 1 in bestimmten Abständen mit noch heißerem Wasser aus hygienischen Gründen gespült werden, so geschieht dies im zweiten Betriebsmodus: Dieser wird wie folgt erreicht:
Durch Einführen des stiftartigen Werkzeuges in die Bohrung 40 der Schürze 2ab des Handgriffes 2 lässt sich der Riegel 33 aus der in Figur 6 dargestellten Verriegelungsposition in die in Figur 12 dargestellte Entriegelungsposition unter elastischer Verformung der Federabschnitte 33a, 33b verschieben. In der Entriegelungsposition der Figur 12 kann nunmehr der Riegel 33 in axialer Richtung gemeinsam mit dem gesamten Handgriff 2 über die Außenverzahnung 43 des Aufnahmeteils 26 geschoben werden. Die axiale Verschiebung findet ihr Ende, wenn, wie in Figur 8 dargestellt, der Flansch 29 des Aufnahmeteiles 26 an der Wand 28 der Schürze 2aa anstößt. Die axiale Relativbewegung zwischen der Schürze 2aa mit ihrer Wand 28 und dem Aufnahmeteil 26 wird begleitet von einer Kompression der Druckfeder 31.

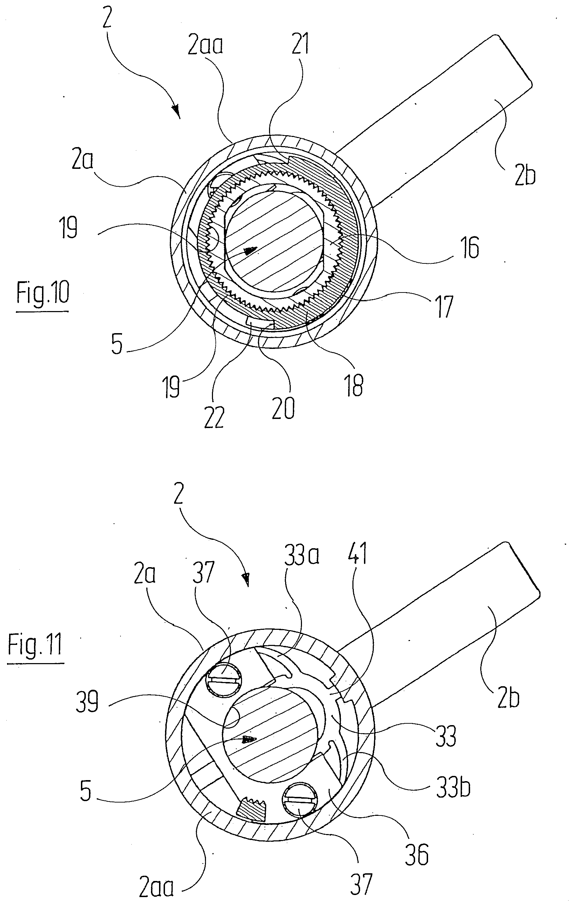

In der neuen Axialposition des Handgriffes 2 kann nunmehr die Anschlagnase 32 des Handgriffes 2 aufgrund ihrer neuen Axialposition seitlich am Anschlagring 18 vorbei, winkelmäßig über die Anschlagflächen 20, 21 hinaus verdreht werden. Eine solche Verdrehung, deren Ergebnis in den Figuren 8 bis 13 dargestellt ist, hat zur Folge, dass am Auslauf der sanitären Thermostatarmatur 1 Temperaturen des Mischwassers erhalten werden, die über den höchstzulässigen Mischwassertemperaturen im "Normalbetrieb" liegen, bei denen also Verbrühungen der Benutzer eintreten könnten. Grundsätzlich können Mischwassertemperaturen erreicht werden, die der maximalen Temperatur des von der Warmwasserversorgung erzeugten warmen Wassers entspricht.

Es handelt sich dabei um eine solche Temperatur, bei welcher eine Entkeimung, insbesondere auch im Blick auf Legionellen, stattfinden kann.

Die oben geschilderte Verdrehung des Handgriffes 2 in der Entriegelungsstellung der Figuren 8 bis 13 wird nunmehr durch die in axialer Richtung versetzte Anschlagnase 22 des Anschlagringes 18 begrenzt, die mit der Anschlagnase 32 des Handgriffs 2 zusammenwirkt.

Da in der Entriegelungsstellung der Figuren 8 bis 13 die Anschlagnase 32 des Handgriffes 2 an der äußeren Stirnfläche des Anschlagringes 18 in demjenigen Bogenbereich anliegt, in welchem der Außendurchmesser größer ist, kann der Handgriff 2 bei entsprechender Winkelposition unter dem Einfluss der Druckfeder 31 auch nicht mehr von selbst in die normale Betriebsposition der Figuren 1 bis 7 zurückkehren.

In der Entriegelungsposition der Figuren 8 bis 13 wird zwischen der inneren, ringförmigen Stirnfläche des Handgriffes 2 und der benachbarten ringförmigen Stirnfläche des Gehäuseteiles 4b des Hauptteilgehäuses 4 ein ringförmiger Flächenabschnitt 42 des Gehäuseteiles 4a sichtbar. Dieser Flächenabschnitt 42 kann mit einer Warnfarbe, z. B. rot, versehen werden. Ist sie sichtbar, bedeutet dies, dass sich die sanitäre Thermostatarmatur 1 im Spülmodus befindet. Dies kann auch von weitem im Vorübergehen von einer Aufsichtsperson oder dergleichen problemlos erkannt werden. Thermostatarmaturen 1, bei denen die Signalfarbe an dem Flächenabschnitt 42 sichtbar ist, dürfen selbstverständlich nicht normal genutzt werden.

Die Rückstellung des Handgriffes 2 aus der Entriegelungsposition im Spülmodus entsprechend den Figuren 8 bis 13 in die verriegelte Position der Figuren 1 bis 7 geschieht einfach dadurch, dass der Handgriff 2 in einen Winkelbereich verdreht wird, in welchem seine Anschlagnase 32 neben dem Winkelbereich kleineren Durchmessers des Anschlagringes 18 liegt. Lässt man dann den Handgriff 2 los, wird dieser durch die Wirkung der Druckfeder 31 in axialer Richtung in die Ausgangsposition der Figuren 1 bis 7 bewegt, wobei gleichzeitig der die Signalfarbe tragende Flächenabschnitt 42 am Gehäuseteil 4a wieder verdeckt wird.

Im Anschluss an diese Axialbewegung des Handgriffes 2 kehrt auch der Riegel 33 unter dem Einfluss seiner Federabschnitte 33a, 33b wieder in die Verriegelungsposition der Figur 6 zurück.

Die sanitäre Thermostatarmatur 1 kann nunmehr in normaler Weise wieder vorm Benutzer in Gebrauch genommen werden.

## Patentansprüche

1. Sanitäre Thermostatarmatur mit
a) einem Armaturenhauptteil (3) mit einem Hauptteilgehäuse (4), in dem wasserführende Kanäle (6, 7, 14) und Ventilsitze ausgebildet sind;
b) einem in dem Hauptteilgehäuse (4) angeordneten, auf die Temperatur des ausfließenden Mischwassers ansprechenden thermostatischen Regelelement (5), das einen axial beweglichen Regelschieber (5b), der mit den Ventilsitzen des Hauptteilgehäuses (4) zusammenwirkt, sowie eine Drehspindel (15) aufweist, mit der eine Solltemperatur des ausfließenden Mischwassers eingestellt werden kann;
c) einem an dem Hauptteilgehäuse (4) befestigbaren Anschlagring (18), an dem mindestens eine radial verlaufende Anschlagfläche (20, 21) vorgesehen ist;
d) einem Handgriff (2), der eine Aufnahme (24) zur drehschlüssigen Verbindung mit der Drehspindel (15) und einen Anschlagkörper (32) aufweist;
wobei
e) der Handgriff (2) in eine erste axiale Relativposition zum Anschlagring (18) gebracht werden kann, in welcher sein Anschlagkörper (32) beim Verdrehen der Drehspindel (15) mit der Anschlagfläche (20, 21) des Anschlagringes (18) wechselwirkt, sowie in eine zweite axiale Relativposition, in welcher sein Anschlagkörper (32) an der Anschlagfläche (20, 21) vorbeibewegt werden kann;
und
f) eine lösbare Verriegelungseinrichtung (33) vorgesehen ist, welche eine unautorisierte Bewegung des Handgriffs (2) aus der ersten in die zweite axiale Relativposition verhindert,
**dadurch gekennzeichnet, dass**
g) der Anschlagring (18) axial versetzt zu der Anschlagfläche (20, 21) einen Anschlagkörper (22) aufweist, der in der zweiten axialen Relativposition zwischen Handgriff (2) und Hauptteilgehäuse (4) mit dem Anschlagkörper (32) des Handgriffs (2) zusammenwirkt.

2. Sanitäre Thermostatarmatur nach Anspruch 1,**dadurch gekennzeichnet, dass** die Verriegelungseinrichtung einen radial verschiebbar geführten Riegel (33) umfasst, der über eine im Handgriff (2) oder im Hauptteilgehäuse vorgesehene Öffnung (40) mittels eines Werkzeuges betätigbar ist.

3. Sanitäre Thermostatarmatur nach Anspruch 2, **dadurch gekennzeichnet, dass** der Riegel (33) am Handgriff (2) verschiebbar geführt und gemeinsam mit diesem axial bewegbar ist und mit einem axial nicht gegenüber dem Hauptteilgehäuse (4) beweglichen Teil (26) zusammenwirkt.

4. Sanitäre Thermostatarmatur nach Anspruch 3,**dadurch gekennzeichnet, dass** das axial nicht bewegliche Teil ein Aufnahmeteil (26) ist, welches den äußeren Endbereich der Drehspindel (15) drehschlüssig aufnimmt und das selbst mit dem Handgriff (2) drehschlüssig verbunden aber axial verschiebbar gegenüber diesem ist.

5. Sanitäre Thermostatarmatur nach Anspruch 3 oder 4, **dadurch gekennzeichnet, dass** der Riegel (33) eine Innenausnehmung (34) aufweist, die eine solche Form aufweist, dass sie in einer Radialstellung des Riegels (33) das mit ihm zusammenwirkende, axial nicht bewegliche Teil (26) passieren lässt, während in einer anderen Radialstellung das axial bewegliche Teil (26) nicht passieren kann.

6. Sanitäre Thermostatarmatur nach Anspruch 2, **dadurch gekennzeichnet, dass** der Riegel am Hauptteilgehäuse axial feststehend geführt ist und mit einem gemeinsam mit dem Handgriff axial beweglichen Teil zusammenwirkt.

7. Sanitäre Thermostatarmatur nach einem der Ansprüche 2 bis 6, **dadurch gekennzeichnet, dass** eine Federeinrichtung (33a, 33b) vorgesehen ist, welche den Riegel (33) in diejenige Radialstellung drückt, in welcher eine Axialbewegung des Handgriffes (2) aus der ersten axialen Relativposition unterbunden ist.

## Claims

1. Sanitary thermostatic fitting, having
a) a fitting main part (3) having a main part housing (4) in which water-carrying channels (6, 7, 14) and valve seats are formed;
b) a thermostatic control element (5) arranged in the main part housing (4) and responsive to the temperature of the outflowing mixed water, which has an axially movable control valve (5b) which is cooperating with the valve seats of the main part housing (4), and a turning spindle (15), with which a setpoint temperature of the outflowing mixed water can be adjusted;
c) a stop ring (18) mountable on the main part housing (4), at which stop ring (18) is provided at least one radially running stop surface (20, 21);
d) a handle (2) having a receiving seat (24) for a torque-locked connection with the turning spindle (15), and a stop body (32);
wherein
e) the handle (2) can be brought into a first axial relative position to the stop ring (18), in which its stop body (32) cooperates with the stop surface (20, 21) of the stop ring (18) during rotation of the turning spindle (15), and into a second axial relative position, in which its stop body (32) can be moved past the stop surface (20,21)
and
f) a detachable locking device (33) is provided, which prevents an unauthorized movement of the handle (2) from the first into the second relative position;
**characterized in that**
g) the stop ring (18) has, axially offset to the stop surface (20), a stop body (22), which cooperates in the second axial relative position between handle (2) and main part housing (4) with the stop body (32) of the handle (2).

2. Sanitary thermostatic fitting according to Claim 1, **characterized in that** the locking device includes a latch (33), guided radially displaceable, which is operable via an opening (40) provided in the handle (2) or in the main part housing by means of a tool.

3. Sanitary thermostatic fitting according to Claim 2, **characterized in that** the latch (33) is displaceably guided at the handle (2) and is, together with this, axially movable and cooperates with a part (26) immovable relative to the main part housing (4).

4. Sanitary thermostatic fitting according to Claim 3, **characterized in that** the axially immovable part is a receiving part (26), which receives the outer end area of the turning spindle (15) in a torque-locked manner and which itself is connected in a torque-locked manner to the handle (2), but is axially displaceable relative thereto.

5. Sanitary thermostatic fitting according to Claim 3 or 4, **characterized in that** the latch (33) has an internal recess (34), having a shape such that, in a radial position of the latch (33), it allows to pass the axially immovable part (26) cooperating therewith to pass, while, in another radial position, the immovable part (26) cannot pass.

6. Sanitary thermostatic fitting according to Claim 2, **characterized in that** the latch is axially fixedly guided at the main part body and that it cooperates with a part movable axially together with the handle.

7. Sanitary thermostatic fitting according to one of the Claims 2 to 6, **characterized in that** a spring device (33a, 33b) is provided, which pushes the latch (33) into that radial position, in which an axial movement of the handle (2) out of the first axial relative position is prevented.

## Revendications

1. Robinetterie sanitaire thermostatique comprenant
a) une partie principale (3) munie d'un carter (4) dans lequel sont ménagés des canaux (6, 7, 14) d'acheminement d'eau, et des sièges d'obturation ;
b) un élément régulateur thermostatique (5) qui est logé dans le carter (4) de la partie principale, réagit à la température de l'eau mitigée sortante et comporte un coulisseau de régulation (5b), mobile axialement et coopérant avec les sièges d'obturation dudit carter (4) de la partie principale, ainsi qu'une broche rotative (15) à l'aide de laquelle une température de consigne de l'eau mitigée sortante peut être réglée ;
c) une bague de butée (18) pouvant être fixée audit carter (4) de la partie principale, et sur laquelle est prévue au moins une surface de butée (20, 21) s'étendant radialement ;
d) une poignée (2) pourvue d'un corps de butée (32) et d'un logement (24) dévolu à la liaison tournante avec ladite broche rotative (15), par engagement positif ;
sachant
e) que ladite poignée (2) peut être amenée, par rapport à ladite bague de butée (18), à un premier emplacement axial relatif auquel son corps de butée (32) est en interaction, lors de la rotation de ladite broche rotative (15), avec la surface de butée (20, 21) de ladite bague de butée (18), ainsi qu'à un second emplacement axial relatif auquel son corps de butée (32) peut être mû en regard de ladite surface de butée (20, 21),
et
f) qu'il est prévu un dispositif de verrouillage (33) libérable, qui empêche un mouvement non autorisé de ladite poignée (2) vers le second emplacement axial relatif, à partir du premier emplacement ;
**caractérisée par le fait**
g) **que** la bague de butée (18) comporte, de manière décalée axialement par rapport à la surface de butée (20, 21), un corps de butée (22) qui coopère avec le corps de butée (32) de la poignée (2) au second emplacement axial relatif entre ladite poignée (2) et le carter (4) de la partie principale.

2. Robinetterie sanitaire thermostatique selon la revendication 1, **caractérisée par le fait que** le dispositif de verrouillage inclut un verrou (33) guidé à coulissement axial et pouvant être actionné, au moyen d'un outil, par l'intermédiaire d'un orifice (40) prévu dans la poignée (2) ou dans le carter de la partie principale, et

3. Robinetterie sanitaire thermostatique selon la revendication 2, **caractérisée par le fait que** le verrou (33) est guidé à coulissement sur la poignée (2), peut être mû conjointement à cette dernière dans le sens axial, et coopère avec une pièce (26) non douée de mobilité axiale par rapport au carter (4) de la partie principale.

4. Robinetterie sanitaire thermostatique selon la revendication 3, **caractérisée par le fait que** la pièce, non douée de mobilité axiale, est une pièce réceptrice (26) qui reçoit, de manière solidaire en rotation, la région extrême extérieure de la broche rotative (15) et qui est, par elle-même, reliée à la poignée (2) de manière solidaire en rotation tout en pouvant, néanmoins, coulisser dans le sens axial par rapport à cette dernière.

5. Robinetterie sanitaire thermostatique selon la revendication 3 ou 4, **caractérisée par le fait que** le verrou (33) est muni d'un évidement intérieur (34) configuré de façon telle qu'il autorise, dans une position radiale dudit verrou (33), le passage de la pièce (26) non douée de mobilité axiale qui coopère avec ce dernier, tandis que ladite pièce (26), non douée de mobilité axiale, ne peut pas passer dans une autre position radiale.

6. Robinetterie sanitaire thermostatique selon la revendication 2, **caractérisée par le fait que** le verrou est guidé sur le carter de la partie principale de manière fixe, dans le sens axial, et coopère avec une pièce mobile conjointement à la poignée dans le sens axial.

7. Robinetterie sanitaire thermostatique selon l'une des revendications 2 à 6, **caractérisée par le fait qu'**il est prévu un dispositif élastique (33a, 33b) qui pousse ledit verrou (33) vers la position radiale interdisant un mouvement axial de ladite poignée (2) à partir du premier emplacement axial relatif.
